# EUROPEAN PATENT SPECIFICATION

(11) **EP 3 988 392 B1**
(45) Date of publication and mention of the grant of the patent: **30.08.2023**
(21) Application number: 20203156.3
(22) Date of filing: 21.10.2020
(51) Int. Cl.: B60Q 1/26, B60Q 1/04, B62D 65/02, B62D 65/16

(54) **METHOD TO MOUNT A COMPONENT ON A HATCH OF A MOTOR VEHICLE**
VERFAHREN ZUR MONTAGE EINES BAUTEILS AN EINER KLAPPE EINES KRAFTFAHRZEUGS
PROCÉDÉ DE MONTAGE D'UN ÉLÉMENT SUR UN PANNEAU DE VÉHICULE AUTOMOBILE

(43) Date of publication of application: 27.04.2022
(73) Proprietor: FCA Italy S.p.A., 10135 Torino (IT)
(72) Inventor: MASCIAVE', Vincenzo, 10135 TORINO (IT)
(74) Representative: Lovino, Paolo

(56) References cited:
- EP-A1- 1 990 260
- DE-A1- 3 424 577
- DE-C1- 3 229 728
- GB-A- 2 550 872
- US-A1- 2017 101 064

## Description

The present invention relates to a method to mount a component on a hatch of a motor vehicle.

The present invention further relates to a covering element that can be coupled to the aforesaid component in a releasable manner during the mounting on the motor vehicle.

More in detail, the component is a portion of a front optical assembly of the motor vehicle and the hatch is the hood of the motor vehicle.

Motor vehicles are known, which comprise a body and a pair of front optical assemblies.

The body comprises, in turn:
- a fixed frame defining a passenger compartment, a rear trunk and a front engine compartment; and
- a plurality of hatches hinged to the fixed frame, among which there is a hood hinged to the fixed frame at the front so as to allow access to the engine compartment in case of need.

Further examples of hatches are defined by the side doors, which are laterally hinged to the aforesaid frame so as to allow access to the passenger compartment, and by a hatch hinged to the frame at the back so as to allow access to the trunk.

The hood comprises, in turn, a reinforcement structure and a cover, which is coupled to the reinforcement structure and defines an outer surface of the hood.

In a traditional solution, the front optical assemblies are mounted on the fixed frame.

In a more recent solution, the front optical assemblies comprise, in turn:
- first portions with first lamps housed in respective seats carried by the hood; and
- second portions with second lamps carried by the fixed frame.

More in detail, each first and second portion comprises:
- a support body housing the relative first or second lamp; and
- a transparent element closing the support body.

When the hood is in a closed position, the transparent elements of the first and of the second portions are adjacent to and contiguous with one another so as to define, together, one single transparent element of the relative front optical assembly.

On the contrary, when the hood is in an open position, the transparent elements of the first and of the second portions of each front optical assembly are spaced apart from one another.

More precisely, the first portions are fixed to the reinforcement structure with the hood in the open position and must be placed precisely and in a centred manner relative to the respective seats.

In addition, the first portions must be placed correctly so as to be contiguous with the respective second portions, once the hood is in the closed position.

Furthermore, the first portions are generally produced in a first plant and transferred to a second plant, where they are mounted on the hood.

A need is felt within the industry to make the correct positioning and centring of the first portions inside the relative seats, when the hood is in the open position, as repeatable and precise as possible.

Moreover, a need is also felt within the industry to make the correct positioning of the first portions relative to the cover of the hood, when the latter is in the open position, as repeatable and precise as possible.

Furthermore, a need is also felt within the industry to avoid any interference between the first portions and the cover of the hood during the mounting of the first portions on the hood, so as to increase the mounting speed.

Moreover, a need is felt within the industry to point out to operators, in an objective and nonambiguous manner, that the first portions are correctly installed on the hood during the aforesaid mounting operation.

Finally, a need is felt within the industry to protect the first portions during transportation from the first plant to the second plant.

GB-A-2550872 discloses a lamp fitting device for aligning a lamp assembly with a panel of a vehicle. It includes a lamp aligning means for aligning the lamp fitting device with the lamp assembly and a panel aligning means for aligning the lamp fitting device with the panel. The lamp fitting device may thus be aligned with and attached to the lamp assembly, offered up and aligned with panel, so as to align the lamp assembly with an aperture in the panel. Consequently the lamp assembly can be installed, then the lamp fitting device can be removed leaving the lamp assembly aligned with the panel. Additionally, the lamp fitting device may be made of a resilient material, an elastomer or a high friction surface. Finally, the device may have a removal means such as removable tabs.

In order to fix a divided light to a vehicle, part of the light being attached to the body of the vehicle and the other part to a flap which can be moved in relation to the body, DE-C-3229728 proposes to attach, by means of a mounting gauge which is applied to the part of the light already attached, a mounting strip for the second part of the light on the body or flap in an exactly fixed position. After the flap opens, the second part of the light can be screwed from the inside without corrections in a positionally correct manner so that no attachment elements can be seen from the outside. Preferably, the mounting strip has at least two bores into which initially the fixing device of the mounting gauge engages and through which the attachment elements of the second part of the light are later inserted.

DE3424577A1 discloses a method for fixing a divided light to a vehicle is proposed, centring elements being bonded to the vehicle body or folding door in a precisely fixed position by means of a fitting gauge which is applied to the already fastened part of the light. The second part of the light is fitted onto these centring elements and screwed from the inside after the folding door is opened.US-A-2017101064 discloses methods and systems for installation and alignment of a vehicle emblem on a body panel assembly include a tool including an outer handling side facing an operator and an inner alignment side facing the body panel assembly. The inner alignment side includes an inner facing surface and an emblem holding volume that is sized and shaped to receive the vehicle emblem therein, the inner alignment side further includes an alignment ridge extending outwardly therefrom that together with the inner facing surface defines a panel receiving volume. A first and second sensor assembly may include vehicle panel detectors respectively aligned with perpendicular first and second axes. The first sensor assembly and the second sensor assembly are arranged to concurrently provide an indication of alignment with the body panel assembly of the vehicle with a datum surface of the body panel assembly engaged by the alignment ridge in a predetermined orientation.

EP-A-1990260 discloses a vehicle wing with an opening (28) in which an optical block (14) is placed, where the optical block is formed of a metallic optical case and a transparent optical glazing. Elastic tongues forming elastic stops are placed at the periphery of the opening, and the block is applied against the tongues. The tongues are arranged such that the block is placed in different positions with respect to the opening while being supported against the tongues. The tongues are elastically deformable independently from one another.

The object of the present invention is to provide a method to mount a component on a hatch of a motor vehicle, which allows the aforesaid needs to be met in a simple and economic fashion.

The aforesaid object is reached by the present invention, as it relates to a method to mount a component on a hatch a motor vehicle according to claim 1.

Furthermore, the invention relates to a covering element for a component of a motor vehicle according to claim 5.

The invention will be best understood upon perusal of the following detailed description of a preferred embodiment, which is provided by mere way of nonlimiting example, with reference to the accompanying drawings, wherein:
- figure 1 shows a step of a method to mount a portion of an optical assembly on a hood of a motor vehicle according to the present invention;
- figure 2 shows, on a highly enlarged scale and in a front view, a covering element coupled to the portion of the optical assembly during the step of the mounting method of Figure 1;
- figure 3 shows a first face, arranged - in use - at the back, of the covering element uncoupled from the portion of the optical assembly of figures 1 and 2;
- figure 4 shows a second face, arranged - in use - at the front, of the covering element uncoupled from the portion of the optical assembly of figures 1 to 3;
- figure 5 is a cross-section along line V-V of figure 4;
- figure 6 is a cross section along line VI-VI of figure 4; and
- figure 7 is a perspective view, on a highly enlarged scale, of the hood arranged in a closed position with the optical assembly mounted according to the method of the invention.

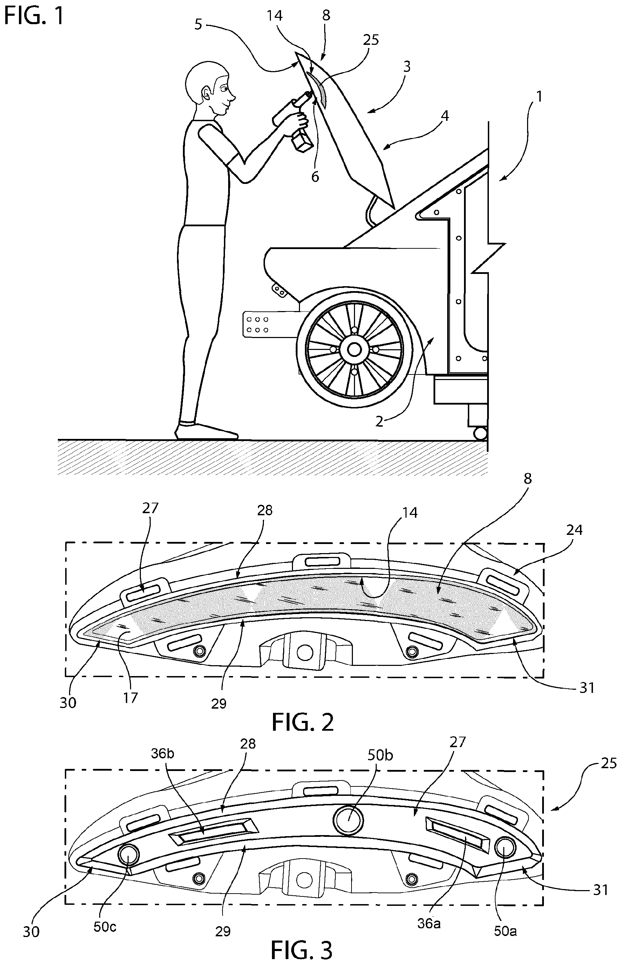

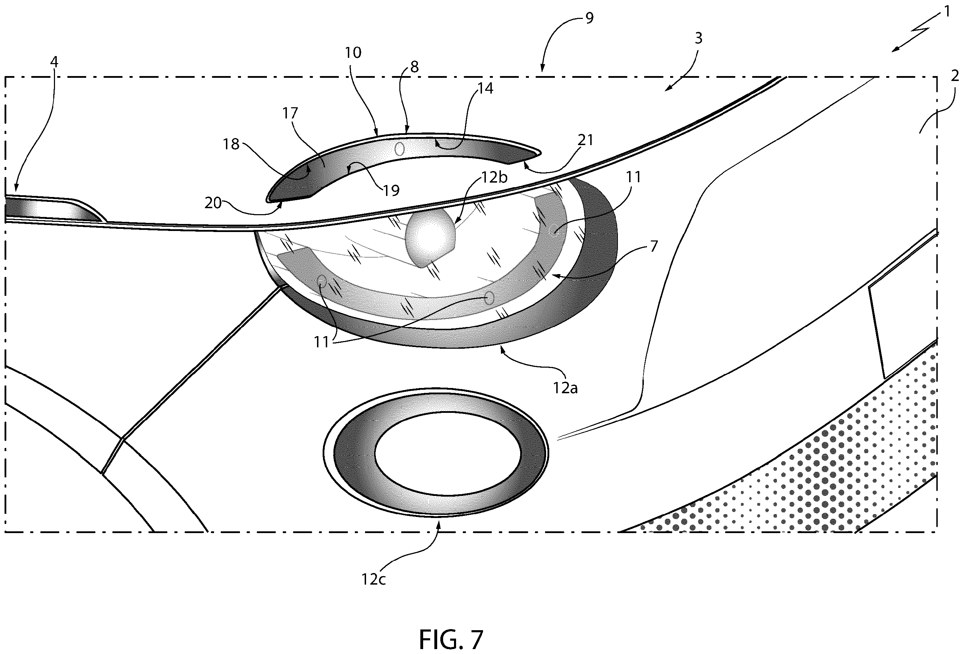

With reference to Figures 1 and 7, number 1 indicates a known motor vehicle, which is only described to an extent deemed necessary for the purposes of the invention.

Hereinafter, expressions such as "at the top", "at the bottom", "laterally", "at the front", "at the back" and others similar to them are indicated with reference to a normal forward moving direction of the motor vehicle 1.

More in detail, the motor vehicle 1 basically comprises:
- a frame 2 defining a passenger compartment, a trunk arranged at the back and an engine compartment arranged at the front; and
- a hood 3 arranged at the front and hinged to the frame 2.

More in detail, the hood 3 can be moved, relative to the frame 2, between:
- an open position (Figure 1), in which it allows access to the engine compartment; and
- a closed position (Figure 7), which it normally assumes when the motor vehicle 1 is running or is parked and in which it forbids access to the engine compartment.

The hood 3 further comprises:
- an inner surface 5 facing the engine compartment; and
- an outer surface 4 opposite the surface 5.

The hood 3 further comprises a reinforcement 6 (only schematically shown in Figure 1) arranged in the area of the surface 5.

The motor vehicle 1 further comprises a pair of front optical assemblies 9 (only one of them being visible in Figure 7).

Each optical assembly 9 basically comprises:
- a portion 8 carried by the hood 3 and comprising a lamp 10;
- a portion 7 carried by the frame 2 and comprising one or more lamps 11 (only schematically shown in Figure 7); and
- further portions 12a, 12b, 12c carried by the frame 2 and comprising respective lamps, which are not shown and not described in detail since they are not necessary for the comprehension of the present invention.

The portions 8 assume predetermined positions relative to the portions 12a, 12b, 12c once the hood 3 is in the closing position. This is intended both in order to give the hood 3 a desired aesthetic look and in order to make sure that the relative optical assembly 9 generates a correctly oriented light beam.

In the example shown herein, the portions 12a, 8 are arc-shaped and are contiguous with one another so as to define a substantially closed ring when the hood 3 is in the closed position.

The portion 7 also is arc-shaped and is contained inside the aforesaid ring defined by the portions 12a, 8 when the hood 3 is in the closed position.

The portion 12b is shaped so as to be contained in the aforesaid substantially closed ring when the hood 3 is in the closed position.

The portion 12c is shaped like a further closed ring on the outside of the portions 12a, 12b.

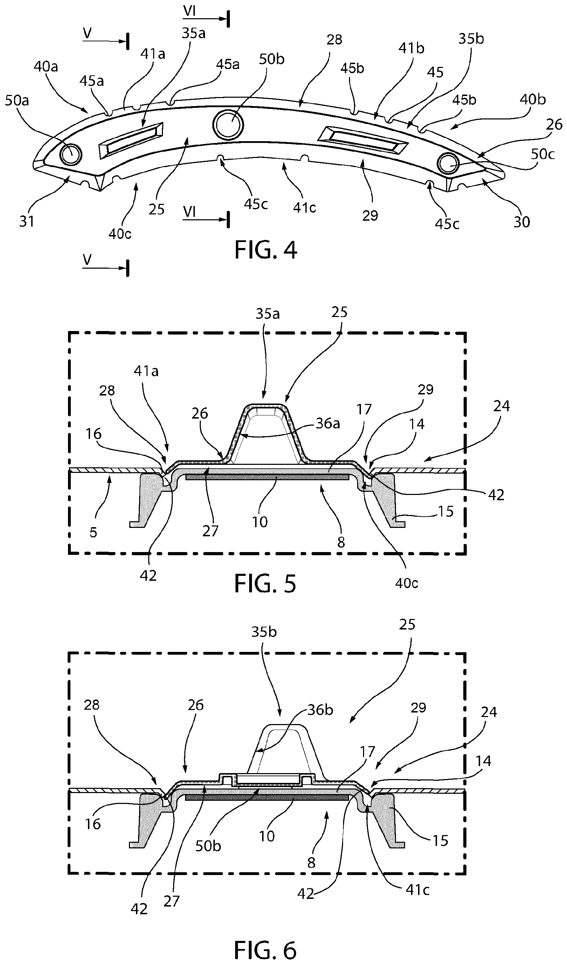

The portion 8 basically comprises (Figures 5 and 6) :
- a support body 15, which is partially hollow, is open at the front and is fixed to the reinforcement 6 in a known manner;
- the lamp 10, which is housed inside the support body 15 and is electrically connected to a battery of the motor vehicle 1; and
- a transparent element 17, which closes the support body 15 and is arranged at a seat 14 defined by the hood 3.

More in detail, the seat 14 is closed and is defined by an edge 16 of the hood 3.

Furthermore, the transparent element 17 is shaped like a plate delimited by (Figure 7):
- a pair of segments 18, 19, an upper and a lower segment respectively, which are curved and opposite one another; and
- a pair of straight segments 20, 21, which are opposite one another and interposed between the segments 18, 19.

In the example shown herein, the segment 18 has greater length than the segment 19.

The segments 18, 19 both have a greater length than the segments 20, 21.

The portion 8 is advantageously mounted on the hood 3 by means of the steps of:
i) connecting a covering element 25 to the portion 8 in a releasable manner so as to form an assembly 24;
ii) placing the hood 3 in an open position relative to the frame 2 of the motor vehicle 1;
iii) placing the covering element 25 in a reference position relative to the seat 14 so as to place the portion 8 in a given reference position relative to the hood 3 and to the seat 14;
iv) connecting the support body 15 to the reinforcement 6, for example by means of screws; and
v) removing the covering element 25 from the portion 8.

More in detail, the covering element 25 is placed so as to cover the transparent element 17 during steps i), ii), iii) and iv).

The faces 26, 27 of the covering element 25 are delimited by:
- a pair of curved edges 28, 29, which are an upper and a lower edge respectively and are opposite one another; and
- a pair of substantially straight edges 30, 31, which are opposite one another and extend between the edges 28, 29.

The edge 28 has a greater length than the length of the edge 29.

The edge 29 has a greater length than the length of the edges 30, 31.

The edges 30, 31 diverge from one another moving from the edge 28 to the edge 29.

In the example shown herein, the edges 28, 29, 30, 31 define respective surfaces, which are inclined relative to the faces 26, 27 and converge from the face 27 to the face 26.

The covering element 25 further comprises (Figures 4 to 6) :
- a pair of extractors 35a, 35b, which project in a cantilever fashion from the face 26 and can be grabbed by users in order to remove the covering element 25 from the portion 8 during the aforesaid step v); and
- a plurality of reference elements 40a, 40b, 40c, which abut against the edge 16 of the seat 14 during step iii) so as to place the portion 8 in the correct reference position relative to the seat 14.

More in particular, the reference elements 40a, 40b are placed inside respective abutments 42 of the portion 8 during step i).

In particular, the abutments 42 are arranged on the side of the surface 5.

More in detail, the reference elements 40a, 40b, 40c can be coupled, in a snapping manner, to the edge 16 of the hood 3 on the side of the surface 4 and produce a noise representing the fact that they cooperate with the edge 16 on the side of the surface 4.

More precisely, each reference element 40a, 40b, 40c is composed of a respective plurality of flaps 41a, 41b, 41c, which can elastically be spread from the covering element 25.

Moving from the edge 30 to the edge 31, the flaps 41a, 41b, 41c are alternated with respective recesses 45a, 45b, 45c, which are obtained in the respective edges 28, 29 and are open on the side opposite the covering element 25 (Figure 4).

Thank to the presence of the structural weakening defined by the recesses 45a, 45b, 45c, the flaps 41a, 41b, 41c can elastically be spread from the edges 28, 29 from the faces 26, 27.

More precisely, when the support body 15 abuts against the surface 5 of the hood 3, the edges 28, 29 are housed inside the respective abutments 42.

The further thrust of the support body 15 against the surface 5 of the hood 3 causes the flaps 41a, 41b, 41c to elastically spread from the respective edge 28, 29, move past the edge 16 of the hood 3 and abut, in a snapping manner, against the surface 4 of the edge 16, thus generating the noise representing that this condition has been reached.

The snapping coupling of the flaps 41a, 41b, 41c against the edge 16 and at the surface 4 indicates that the transparent element 17 is correctly placed relative to the seat 14.

In the example shown in Figures 4 to 6, the flaps 41a, 41b are defined by the edge 28 of the covering element 25 and define respective groups spaced apart from one another moving along the segment 18 from the edge 30 to the edge 31.

The flaps 41c form a further group having a greater length than the groups formed by the flaps 41a, 41b measured parallel to the respective edge 28, 29.

The abutments 42 have a shape corresponding to the one of the edges 28, 29.

The extractor 35a (35b) is interposed between the flaps 41a (41b) and 41c moving from the edge 28 to the edge 29 (Figure 4).

Each extractor 35a (35b) defines a respective cavity 36a (36b), which is open on the side of the face 27 (Figures 3, 5 and 6).

The covering element 25 further comprises a plurality of prismatic elements 50a, 50b, 50c, in the example shown herein three of them with a cylindrical shape, which project from the face 27 towards the transparent element 17 during steps i), ii) and iii).

The prismatic elements 50a, 50b, 50c abut against the transparent element 17 through the interposition of a double layer of adhesive tape (not shown) during the aforesaid steps i), ii), iii).

The prismatic elements 50a, 50b, 50c are arranged in a middle position between the edges 28, 29.

In particular, the prismatic elements 50a, 50c are arranged in the area of respective edges 30, 31 and the prismatic element 50b is interposed between the prismatic elements 50a, 50c.

The cavity 36a (36b) of the extractor 35a (35b) is interposed between the prismatic elements 50a, 50b (50b, 50c) moving from the edge 30 to the edge 31 (Figure 3).

The prismatic element 50b is interposed between a portion of the edge 29 without the flaps 41a, 41b and the flaps 41c moving from the edge 28 to the edge 29.

In particular, the covering element 25 is manufactured through thermoforming.

Step i) is preferably carried out in a pre-mounting site and the assembly 24 is sent to a final mounting site, where steps ii), iii), iv) and v) are carried out.

The mounting of the portion 8 on the hood 3 is described below.

During step i), the covering element 25 is connected to the portion 8 of the optical assembly 9 in a releasable manner so as to form the assembly 24.

More precisely, the prismatic elements 50a, 50b, 50c abut against the transparent element 17 through the interposition of the double layer of adhesive tape (not shown) .

Step i) is preferably carried out in the pre-mounting site.

After having completed step i), the assembly 24 is sent to the mounting site.

In the mounting site, the hood 3 is placed in the open position (Figure 1) and the assembly 24 is coupled to the hood 3 during step iii).

More precisely, at first, the second portion 8 is pushed towards the surface 5 of the hood 3 at seat 14 until the support body 15 abuts against the surface 5.

In this condition, the flaps 41a, 41b, 41c abut against the edge 16 on the side of the surface 5.

The further thrust exerted on the assembly 24 towards the surface 5 determines the elastic spreading of the flaps 41a, 41b, 41c from the edges 28, 29 and the consequent overcoming of the edge 16.

In this way, the flaps 41a, 41b, 41c are placed in a snapping manner against the edge 16 on the side of the surface 4 (Figures 5 and 6), thus generating a noise that is characteristic of this arrangement.

This characteristic noise represents, for users, the fact that the transparent element 17 of the portion 8 is correctly positioned relative to the seat 14, with no need for a visual control on the side of the surface 4.

Then, the support element 15 of the portion 8 is screwed on the reinforcement 6 of the hood 3.

At the end of this operation, the covering element 25 covers the transparent element 17 of the lamp 10 so as to engage the seat 14 defined by the hood 3.

More precisely, the face 26 projects towards the outside of the hood 3 from the seat 14 and the face 27 is oriented towards the transparent element 17 and faces the inside of the hood 3.

After that, during step v), the operator exerts an action directed towards the outside of the hood 3 on the extractors 35a, 35b.

Following this action, the covering element 25 is removed from the portion 8.

By so doing, the transparent element 17 faces the inside of the seat 14 of the hood 3, in the right mounting position.

The mounting method and the covering element 25 according to the invention lead to evident advantages that can be obtained using them.

In particular, the covering element 25 is connected to the portion 8 in a releasable manner during step i) so as to form the assembly 24, which is coupled to the hood 3 in the open position during step ii).

The covering element 25 is placed in a reference position relative to the seat 14 during step iii).

In this way, the transparent element 17 of the portion 8 is in a correct position and is centred relative to the seat 14.

Moreover, the portions 8 can be placed in a correct and repeatable manner relative to the surface 4 of the hood 3 arranged in the open position, despite connecting the assembly 24 to the reinforcement 6 of the hood 3.

The temporary snapping positioning of the flaps 41a, 41b, 41c inside the seat 14 gives the operator an objective acoustic indication of the fact that the transparent element 17 is correctly placed inside the seat 14, without requiring the operator to check the positioning by controlling the hood 3 on the side the surface 3.

This allows for an increase in the mounting speed and for a reduction in mounting errors.

Furthermore, there is no risk of interference of the portions 8 with the surface 4 of the hood 3 while the portions 8 are being mounted, thus making a substantial increase in the mounting speed possible.

Furthermore, the covering element 25 is coupled to the portion 8 in the pre-mounting site and the assembly 24 is transported to the mounting site, where it is mounted on the hood 3. Therefore, the covering element 25 allows the portion 8 to be protected during transportation from the pre-mounting site to the mounting site.

Finally, the flaps 41a, 41b, 41c allow the edges 28, 29 to be elastically spread from the faces 26, 27, so as to allow the edges 28, 29 to be inserted inside the respective abutments 42 or so as to allow the edges 28, 29 to be removed from the respective abutments 42.

The flaps 41a, 41b, 41c, furthermore, can be coupled to the hood 3 in a snapping manner and generate, during the coupling to the hood 3, the noise representing, for operators, the correct coupling to the hood 3.

Finally, the mounting method and the covering element 25 described and shown herein can be subjected to changes and variants, which do not go beyond the scope of protection set forth in the appended claims.

In particular, the method according to the invention could be applied to the mounting of a component other than the portion 8 of the optical assembly 9, for example an aesthetic component, provided that the component is mounted in a predetermined position relative to the relative seat 14 with the hood 3 in the open position.

Furthermore, the method according to the invention could be applied to the mounting of the aforesaid component on a hatch other than the hood 3, for example on the side doors allowing access to the motor vehicle 1 or on the rear hatch allowing access to the trunk of the motor vehicle 1.

## Claims

1. A method to mount a first component (8) of an operating assembly (9), in particular a first portion (8) of an optical assembly (9), on a hatch (3), in particular a hood (3), of a motor vehicle (1); said hatch (3) being movable relative to a frame (2) of the motor vehicle (1) between an open position and a closed position; said method comprising the steps of:
i) connecting a covering element (25) comprising reference elements (40a, 40b, 40c) to said first component (8) in a releasable manner so as to form an assembly (24);
ii) placing said hatch (3) in said open position relative to a frame (2) of said motor vehicle (1);
iii) placing said covering element (25) inside a seat (14) of said hatch (3) designed to house said first component (8), so as to place said first component (8) in a given reference position relative to said hatch (3) and to said seat (14);
iv) connecting said first component (8) to said hatch (3); and
v) removing said covering element (25) from said first component (8);
**characterized in that** the reference elements (40a, 40b, 40c) of said covering element (25) comprise at least one flap (41a, 41b, 41c) and said step iii) comprises the step vi) of causing said at least one flap (41a, 41b, 41c) of said covering element (25) to abut against a first end edge (16) delimiting said seat (14 of said hatch (3) on the side of a first surface (5) facing said first component (8); said step
vi) comprising the step vii) of coupling said at least one flap (41a, 41b, 41c) in a snapping manner to the first end edge (16) on the side of a second surface (4) of said hatch (3) delimiting said seat (14) opposite said first surface (5).

2. The method according to claim 1, **characterized in that** during step vii) said at least one flap (41a, 41b, 41c) of said covering element (25) spreads elastically from the remaining part (28, 29, 26, 27) of said covering element (25) so as to move past the end edge (16) of said seat (14).

3. -The method according to any one of the preceding claims, **characterized in that** said step i) comprises the step x) of interposing at least one adhesive tape between a first face (27) of said covering element (25) and said first component (8).

4. The method according to claim 3, **characterized in that** said step v) comprises the step xi) of grabbing at least one extraction element (35a, 35b) carried by a second face (26), opposite said first face (27), of said covering element (25).

5. A covering element (25) adapted to be coupled, in use, to a first component (8) of an operating assembly (9) of a motor vehicle (1), in particular a first portion (8) of an optical assembly (9), during the mounting on a hatch (3), in particular a hood (3), of said motor vehicle (1) according to the method of any one of claims 1 to 4, **characterized in that** it comprises:
- releasable connection means (50a, 50b, 50c), which are adapted to connect, in use, said covering element (25) to said first component (8) in a releasable manner;
- reference elements (40a, 40b, 40c), which are adapted to abut against a first end edge (16) of a seat (14) of said hatch (3) designed to house said first component (8), so as to place said first component (8) in a given reference position relative to said hatch (3) ;
- extraction elements (35a, 35b), which can be grabbed by an operator in order to allow the covering element (25) to be removed from said first component (8).

6. The covering element according to claim
**characterized in that** said reference elements (40a, 40b, 40c) are configured to determine, in use, a snapping coupling of said covering element (25) to the first end edge (16) of said seat (14).

7. The covering element according to claim 5 or 6,
**characterized in that** it comprises:
- a first face (26), from which said extraction elements (35a, 35b) project;
- a second face (27), which is opposite said first face (26) and is adapted to face, in use, said first component (8); and
- a second and a third end edge (28, 29) opposite one another, between which said first and second face (26, 27) extend and which define said reference elements (40a, 40b, 40c).

8. The element according to claim 7, **characterized in that** said reference elements (40a, 40b, 40c) comprise, in turn:
- first flaps (41a, 41b), which are carried by said first edge (28) and are spaced apart from one another
- a second flap (41c), which is carried by said second edge (29), has a greater extension than the extension of said first flaps (41a, 41b) and faces said first flaps (41a, 41b);
said first flaps (41a, 41b) and said second flap (41c) being capable of elastically spreading from the respective second and third edge (28, 29) from said first and second face (26, 27) so as to allow them, in use, to be coupled to said first end edge (16) in a snapping manner.

9. The element according to claim 8, **characterized in that** at least one reference element (40a, 40b, 40c) comprises at least one recess (45) interposed between two consecutive flaps (41a, 41b, 41c).

10. -The element according to any one of the claims from 7 to 9, **characterized in that** said second face (27) comprises a pair of prismatic elements (50a, 50b, 50c), which are adapted to come into contact, in use, with said first component (8) through the interposition of an adhesive tape.

## Patentansprüche

1. Verfahren zur Montage einer ersten Komponente (8) einer Betriebsanordnung (9), insbesondere eines ersten Abschnitts (8) einer optischen Anordnung (9), an einer Klappe (3), insbesondere einer Motorhaube (3), eines Kraftfahrzeugs (1);
wobei die Klappe (3) relativ zu einem Rahmen (2) des Kraftfahrzeugs (1) zwischen einer offenen Position und einer geschlossenen Position beweglich ist; wobei das Verfahren die Schritte umfasst:
i) Verbinden eines Abdeckelements (25), das Referenzelemente (40a, 40b, 40c) umfasst, auf lösbare Weise mit der ersten Komponente (8), um so eine Anordnung (24) zu bilden;
ii) Anordnen der Klappe (3) in der offenen Position relativ zu einem Rahmen (2) des Kraftfahrzeugs (1) ;
iii) Anordnen des Abdeckelements (25) innerhalb eines Sitzes (14) der Klappe (3), der dazu ausgebildet ist, die erste Komponente (8) aufzunehmen, um so die erste Komponente (8) in einer gegebenen Referenzposition relativ zu der Klappe (3) und zu dem Sitz (14) anzuordnen;
iv) Verbinden der ersten Komponente (8) mit der Klappe (3); und
v) Entfernen des Abdeckelements (25) von der ersten Komponente (8); **dadurch gekennzeichnet, dass** die Referenzelemente (40a, 40b, 40c) des Abdeckelements (25) wenigstens eine Lasche (41a, 41b, 41c) umfassen und der Schritt iii) den Schritt vi) des Bewirkens umfasst, dass die wenigstens eine Lasche (41a, 41b, 41c) des Abdeckelements (25) an einem ersten Endrand (16) zur Anlage kommt, die den Sitz (14) der Klappe (3) auf der Seite einer der ersten Komponente (8) zugewandten ersten Fläche (5) begrenzt; wobei der Schritt
vi) den Schritt vii) des Schnappverbindens der wenigstens einen Lasche (41a, 41b, 41c) mit dem ersten Endrand (16) auf der Seite einer zweiten Fläche (4) der Klappe (3), die den Sitz (14) gegenüber der ersten Fläche (5) begrenzt, umfasst.

2. Verfahren nach Anspruch 1, **dadurch gekennzeichnet, dass** während des Schrittes vii) die wenigstens eine Lasche (41a, 41b, 41c) des Abdeckelements (25) sich elastisch vom restlichen Teil (28, 29, 26, 27) des Abdeckelements (25) abspreizt, so dass sie sich an dem Endrand (16) des Sitzes (14) vorbeibewegt.

3. Verfahren nach einem der vorhergehenden Ansprüche, **dadurch gekennzeichnet, dass** Schritt i) den Schritt x) des Anordnens wenigstens eines Klebebandes zwischen einer ersten Seite (27) des Abdeckelements (25) und der ersten Komponente (8) umfasst.

4. Verfahren nach Anspruch 3, **dadurch gekennzeichnet, dass** Schritt v) den Schritt xi) des Ergreifens wenigstens eines Extraktionselements (35a, 35b), das von einer der ersten Seite (27) gegenüberliegenden zweiten Seite (26) des Abdeckelements (25) getragen wird, umfasst.

5. Abdeckelement (25), welches dazu eingerichtet ist, im Gebrauch mit einer ersten Komponente (8) einer Betriebsanordnung (9) eines Kraftfahrzeugs (1), insbesondere mit einem ersten Abschnitt (8) einer optischen Anordnung (9), während der Montage an einer Klappe (3), insbesondere einer Motorhaube (3), des Kraftfahrzeugs (1) gemäß dem Verfahren nach einem der Ansprüche 1 bis 4 gekoppelt zu werden, **dadurch gekennzeichnet, dass** es umfasst:
- lösbare Verbindungsmittel (50a, 50b, 50c), welche dazu eingerichtet sind, im Gebrauch das Abdeckelement (25) auf lösbare Weise mit der ersten Komponente (8) zu verbinden;
- Referenzelemente (40a, 40b, 40c), welche dazu eingerichtet sind, an einem ersten Endrand (16) eines Sitzes (14) der Klappe (3), der dazu ausgebildet ist, die erste Komponente (8) aufzunehmen, zur Anlage zu kommen, um so die erste Komponente (8) in einer gegebenen Referenzposition relativ zu der Klappe (3) anzuordnen;
- Extraktionselemente (35a, 35b), welche von einem Bediener ergriffen werden können, um das Entfernen des Abdeckelements (25) von der ersten Komponente (8) zu ermöglichen.

6. Abdeckelement nach Anspruch 5, **dadurch gekennzeichnet, dass** die Referenzelemente (40a, 40b, 40c) dafür ausgelegt sind, im Gebrauch eine Schnappverbindung des Abdeckelements (25) mit dem ersten Endrand (16) des Sitzes (14) zu bestimmen.

7. Abdeckelement nach Anspruch 5 oder 6, **dadurch gekennzeichnet, dass** es umfasst:
- eine erste Seite (26), von der die Extraktionselemente (35a, 35b) vorstehen;
- eine zweite Seite (27), welche der ersten Seite (26) gegenüberliegt und dazu eingerichtet ist, im Gebrauch der erstes Komponente (8) zugewandt zu sein; und
- einen zweiten und einen dritten Endrand (28, 29), die einander gegenüberliegen, zwischen denen sich die erste und die zweite Seite (26, 27) erstrecken und welche die Referenzelemente (40a, 40b, 40c) definieren.

8. Element nach Anspruch 7, **dadurch gekennzeichnet, dass** die Referenzelemente (40a, 40b, 40c) ihrerseits umfassen:
- erste Laschen (41a, 41b), welche von dem ersten Rand (28) getragen werden und voneinander beabstandet sind;
- eine zweite Lasche (41c), welche von dem zweiten Rand (29) getragen wird, eine Erstreckung aufweist, die größer als die Erstreckung der ersten Laschen (41a, 41b) ist, und den ersten Laschen (41a, 41b) zugewandt ist;
wobei die ersten Laschen (41a, 41b) und die zweite Lasche (41c) in der Lage sind, sich vom zweiten bzw. dritten Rand (28, 29) von der ersten und zweiten Seite (26, 27) elastisch abzuspreizen, um ihnen so zu ermöglichen, im Gebrauch mit dem ersten Endrand (16) in eine Schnappverbindung zu gelangen.

9. Element nach Anspruch 8, **dadurch gekennzeichnet, dass** wenigstens ein Referenzelement (40a, 40b, 40c) wenigstens eine Vertiefung (45) umfasst, die zwischen zwei aufeinander folgenden Laschen (41a, 41b, 41c) angeordnet ist.

10. Element nach einem der Ansprüche 7 bis 9, **dadurch gekennzeichnet, dass** die zweite Seite (27) ein Paar prismatischer Elemente (50a, 50b, 50c) umfasst, welche dazu eingerichtet sind, im Gebrauch mit der ersten Komponente (8) durch die Anordnung eines Klebebandes zwischen ihnen in Kontakt zu kommen.

## Revendications

1. Procédé de montage d'un premier composant (8) d'un ensemble d'actionnement (9), en particulier une première portion (8) d'un ensemble optique (9), sur un hayon (3), en particulier un capot (3), d'un véhicule à moteur (1) ;
ledit hayon (3) étant mobile par rapport à une caisse (2) du véhicule à moteur (1)
entre une position ouverte et une position fermée ; ledit procédé comprenant les étapes de :
i) raccordement d'un élément de recouvrement (25) comprenant des éléments de référence (40a, 40b, 40c) audit premier composant (8) de manière détachable de façon à former un ensemble (24) ;
ii) placement dudit hayon (3) dans ladite position ouverte par rapport à une caisse (2) dudit véhicule à moteur (1) ;
iii) placement dudit élément de recouvrement (25) à l'intérieur d'un siège (14) dudit hayon (3) conçu pour loger ledit premier composant (8), de façon à placer ledit premier composant (8) dans une position de référence donnée par rapport audit hayon (3) et audit siège (14) ;
iv) raccordement dudit premier composant (8) audit hayon (3) ; et
v) retrait dudit élément de recouvrement (25) dudit premier composant (8) ;
**caractérisé en ce que** les éléments de référence (40a, 40b, 40c) dudit élément de recouvrement (25) comprennent au moins un rabat (41a, 41b, 41c) et ladite étape iii) comprend l'étape vi) d'amenée dudit au moins un rabat (41a, 41b, 41c) dudit élément de recouvrement (25) à buter contre un premier bord d'extrémité (16) délimitant ledit siège (14) dudit hayon (3) sur le côté d'une première surface (5) faisant face audit premier composant (8) ; ladite étape
vi) comprenant l'étape vii) de couplage dudit au moins un rabat (41a, 41b, 41c) par encliquetage au premier bord d'extrémité (16) sur le côté d'une seconde surface (4) dudit hayon (3) délimitant ledit siège (14) opposée à ladite première surface (5).

2. Procédé selon la revendication 1, **caractérisé en ce que** pendant l'étape vii) ledit au moins un rabat (41a, 41b, 41c) dudit élément de recouvrement (25) s'étale élastiquement à partir de la partie restante (28, 29, 26, 27) dudit élément de recouvrement (25) de façon à passer au-delà du bord d'extrémité (16) dudit siège (14).

3. Procédé selon l'une quelconque des revendications précédentes, **caractérisé en ce que** ladite étape i) comprend l'étape x) d'interposition d'au moins un ruban adhésif entre une première face (27) dudit élément de recouvrement (25) et ledit premier composant (8) .

4. Procédé selon la revendication 3, **caractérisé en ce que** ladite étape v) comprend l'étape xi) de saisie d'au moins un élément d'extraction (35a, 35b) porté par une seconde face (26), opposée à ladite première face (27), dudit élément de recouvrement (25).

5. Élément de recouvrement (25) adapté pour être couplé, en utilisation, à un premier composant (8) d'un ensemble d'actionnement (9) d'un véhicule à moteur (1), en particulier une première portion (8) d'un ensemble optique (9), pendant le montage sur un hayon (3), en particulier un capot (3), dudit véhicule à moteur (1) selon le procédé de l'une quelconque des revendications 1 à 4, **caractérisé en ce qu'**il comprend :
- des moyens de raccordement détachables (50a, 50b, 50c), qui sont adaptés pour raccorder, en utilisation, ledit élément de recouvrement (25) audit premier composant (8) de manière détachable ;
- des éléments de référence (40a, 40b, 40c), qui sont adaptés pour buter contre un premier bord d'extrémité (16) d'un siège (14) dudit hayon (3) conçu pour loger ledit premier composant (8), de façon à placer ledit premier composant (8) dans une position de référence donnée par rapport audit (3) ;
- des éléments d'extraction (35a, 35b), qui peuvent être saisis par un opérateur afin de permettre le retrait de l'élément de recouvrement (25) dudit premier composant (8).

6. Élément de recouvrement selon la revendication 5, **caractérisé en ce que** lesdits éléments de référence (40a, 40b, 40c) sont configurés pour déterminer, en utilisation, un couplage par encliquetage dudit élément de recouvrement (25) au premier bord d'extrémité (16) dudit siège (14).

7. Élément de recouvrement selon la revendication 5 ou 6, **caractérisé en ce qu'**il comprend :
- une première face (26) à partir de laquelle lesdits éléments d'extraction (35a, 35b) font saillie ;
- une seconde face (27), qui est opposée à ladite première face (26) et est adaptée pour faire face, en utilisation, audit premier composant (8) ; et
- un deuxième et un troisième bord d'extrémité (28, 29) opposés l'un à l'autre, entre lesquels lesdites première et seconde faces (26, 27) s'étendent et qui définissent lesdits éléments de référence (40a, 40b, 40c) .

8. Élément selon la revendication 7, **caractérisé en ce que** lesdits éléments de référence (40a, 40b, 40c) comprennent, à leur tour :
- des premiers rabats (41a, 41b), qui sont portés par ledit premier bord (28) et sont espacés les uns des autres
- un second rabat (41c), qui est porté par ledit deuxième bord (29), présente une extension plus importante que l'extension desdits premiers rabats (41a, 41b) et fait face auxdits premiers rabats (41a, 41b) ;
lesdits premiers rabats (41a, 41b) et ledit second rabat (41c) étant capables de s'étaler élastiquement à partir des deuxième et troisième bords (28, 29) respectifs desdites première et seconde faces (26, 27) de façon à leur permettre, en utilisation, d'être couplés audit premier bord d'extrémité (16) par encliquetage.

9. Élément selon la revendication 8, **caractérisé en ce qu'**au moins un élément de référence (40a, 40b, 40c) comprend au moins un évidement (45) interposé entre deux rabats (41a, 41b, 41c) consécutifs.

10. Élément selon l'une quelconque des revendications 7 à 9, **caractérisé en ce que** ladite seconde face (27) comprend une paire d'éléments prismatiques (50a, 50b, 50c), qui sont adaptés pour entrer en contact, en utilisation, avec ledit premier composant (8) par l'interposition d'un ruban adhésif.
